# EUROPÄISCHE PATENTANMELDUNG

(11) **EP 2 863 286 A1**
(43) Veröffentlichungstag der Anmeldung: **22.04.2015**
(21) Anmeldenummer: 13189107.9
(22) Anmeldetag: 17.10.2013
(51) Int. Cl.: G06F 1/16

(54) **Verbindungselement und System**

(71) Anmelder: Medion AG, 45307 Essen (DE)
(72) Erfinder: Jendrzok, Mark, 61440 Oberursel (DE); Starosta, Oliver, 45307 Essen (DE)
(74) Vertreter: Schweiger, Johannes

(57) **Zusammenfassung**

Die Erfindung betrifft ein diskretes Verbindungselement zwischen einem ersten, insbesondere elektronischen, Bauteil (10), vorzugsweise mit einem flachen, rechteckigen Gehäuse, das eine Tastatur und eine elektronischen Datenverarbeitungsanlage aufnimmt, und einem zweiten elektrischen Bauteil (20),der insbesondere einen Bildschirm umfasst, mit folgenden Merkmalen:
a) das Verbindungselement (30) weist einen ersten Arm (31) und einen zweiten Arm (33) auf,
b) erster und zweiter Arm (31,33) sind über mindestens ein Gelenk (32) gegeneinander verschwenkbar,
c) der erster Arm (31) ist in eine korrespondierenden Aufnahme (14) des ersten elektronischen Bauteils (10) einsteckbar und in der Aufnahme (14) arretierbar,
d) der zweite Arm (33) ist in eine korrespondierende Aufnahme (21) des zweiten elektronischen Bauteils (20) einsteckbar und in der Aufnahme (21) arretierbar.

Neben dem eigenständigen Verbindungselement umfasst die Erfindung ein System, insbesondere einen Laptop.

## Beschreibung

Die Erfindung betrifft ein diskretes (das heißt eigenständiges) Verbindungselement zwischen einem ersten, insbesondere elektronischen, Bauteil, insbesondere mit einem flachen, rechteckigen Gehäuse, das eine Tastatur und eine elektronische Datenverarbeitungsanlage aufnimmt, und einem zweiten elektronischen Bauteil, insbesondere mit einem Bildschirm.

Insoweit betrifft die Erfindung beispielsweise ein Verbindungselement, über das ein Grundkörper eines Laptop (Notebook) mit einem zugehörigen Bildschirm verbunden werden kann.

Der zweite elektronische Bauteil kann nicht nur ein Bildschirm sein, sondern auch ein eigenständiges elektronisches Bauteil, beispielsweise ein sogenannter Tablet-Computer mit eigener Rechnerfunktion. Solche "Hybrid-Laptops" sind bereits bekannt. Dabei lässt sich der Tablet-Teil auf den anderen Teil, einen Grundkörper, aufstecken beziehungsweise vom Grundkörper wieder lösen. Im erstgenannten Fall kann der Bildschirm des Tablet-Computers direkt durch Berühren bedient werden; ebenso ist es möglich, den Bildschirm über die Tastatur des Grundkörpers zu aktivieren. Diese Doppelfunktion (Hybridfunktion) hat gegenüber konventionellen Laptops, bei denen ein Bildschirm über ein festes Gelenk am Grundkörper befestigt ist, zahlreiche Vorteile.

Nachteilig ist jedoch die Bedienbarkeit der einzelnen Bauteile, wenn sie voneinander getrennt sind.

Hier setzt die Erfindung an, der die Aufgabe zugrunde liegt, eine Möglichkeit aufzuzeigen, die Bedienbarkeit von elektronischen Bauteilen, die in funktionalem Zusammenhang stehen, zu verbessern, wobei diese Aufgabe sich insbesondere auf Laptops (Notebooks) und damit verwandte Datenverarbeitungsgeräte der vorstehend genannten Art bezieht.

Der Erfindung liegt folgende Erkenntnis zugrunde:
Ein entscheidender Nachteil der obengenannten "Hybrid-Laptops" besteht darin, dass der Tablet-Teil, wenn er vom "Grundkörper" gelöst ist, entweder auf einer separaten Ablage platziert werden muss, wenn man beide Hände zur Bedienung freihaben möchte, oder man greift den Tablet-Teil mit einer Hand und bedient den Bildschirm mit der anderen Hand, was beides wenig komfortabel ist.

Zur Überwindung dieser Nachteile sieht die Erfindung ein diskretes (autarkes) Verbindungsteil vor, welches ein drittes, eigenständiges Bauteil für einen solchen Hybrid-Rechner ist.

Über das Verbindungselement können zwei elektronische Bauteile zu einer Baugruppe miteinander verbunden werden. Das Verbindungselement kann aber auch wahlweise nur an einem der beiden elektronischen Bauteile befestigt werden. Die Arretiermittel stehen dann zur Verfügung neue, zusätzliche Funktionen zu übernehmen, beispielsweise um das verbundene elektronische Bauteil aufzustellen, und zwar in ganz unterschiedlichen Positionen, entsprechend der Winkelverschiebung Gelenkteile (der Arme des Verbindungselementes) zueinander.

Mit Bezug auf den eingangs erwähnten Hybrid-Rechner kann entsprechend der Tablet-Teil gemeinsam mit dem Verbindungselement vom Grundkörper gelöst werden. Der Arm (Schenkel) des Verbindungselements, der vorher am Grundkörper befestigt war, steht jetzt über den Tablet-Teil vor und kann eine Art Stütze oder Ständer für den Tablet-Teil bilden, so dass der Bildschirm des Tablet-Teils beispielsweise mit der benötigten Schrägstellung auf einer Tischplatte aufgestellt werden kann, um beide Hände des Benutzers frei zu haben.

In ihrer allgemeinsten Ausführungsform betrifft die Erfindung ein diskretes Verbindungselement zwischen einem ersten, insbesondere elektronischen, Bauteil, vorzugsweise mit einem flachen, rechteckigen Gehäuse, das eine Tastatur und eine elektronische Datenverarbeitungsanlage aufnimmt, und einem zweiten elektronischen Bauteil, der insbesondere einen Bildschirm (Monitor) umfasst, mit folgenden Merkmalen:
- das Verbindungselement weist einen ersten, insbesondere flachen, Arm und einen zweiten, insbesondere flachen, Arm auf,
- erster und zweiter Arm sind über mindestens ein Gelenk gegeneinander verschwenkbar,
- der erste Arm ist in eine korrespondierende Aufnahme des ersten elektronischen Bauteils einsteckbar und in der Aufnahme arretierbar,
- der zweite Arm ist in eine korrespondierende Aufnahme des zweiten elektronischen Bauteils einsteckbar und in der Aufnahme arretierbar.

Mit flach im Sinne der Erfindung ist insbesondere ein Querschnitt zur Steckrichtung der Arme in die korrespondierende Aufnahme gemeint, der rechteckig ist und/oder ein Verhältnis der Breite zur Höhe von mindestens 2:1, vorzugsweise mindestens 4:1 aufweist.

Das vorstehend beschriebene Verbindungselement geht von einer rein mechanischen, lösbaren Verbindung mit den elektronischen Bauteilen aus. Entsprechend kann das Verbindungselement in diesem Fall auch nur mechanische Funktionen erfüllen, beispielsweise als Stütze zum Aufstellen des einen oder des anderen elektronischen Bauteils.

In einer Ausführungsform ist zusätzlich vorgesehen, dass mindestens ein Arm/Schenkel des Verbindungselementes mindestens einen Abschnitt einer elektrischen Steckverbindung aufweist.

Auf diese Weise kann zum Beispiel dann, wenn das Verbindungselement mit einem eigenen Stromanschluss versehen wird, oder Strom von einem der Bauteile über das Verbindungselement weitergeleitet/zugeführt wird, elektrische Energie unmittelbar in die angeschlossenen elektronischen Bauteile oder ein weiteres Bauteil übertragen werden. Dazu weisen diese selbstverständlich entsprechende korrespondierende Abschnitte elektrischer Steckverbindungen auf, wie dies nachstehend noch näher erläutert wird.

Es stellt eine Weiterentwicklung der vorgenannten Ausführungsform dar, wenn das Verbindungselement eine elektrische Verbindung zwischen den an den Armen ausgebildeten korrespondierenden Abschnitten der beiden Steckverbindungen umfasst.

Auf diese Weise können von einem elektronischen Bauteil Signale unmittelbar in das andere elektronische Bauteil gegeben werden und umgekehrt.

Ausgehend von einem ersten elektronischen Bauteil nach Art eines Grundkörpers eines Laptops (einschließlich Tastatur) weist der erste elektronische Bauteil entsprechend eine Aufnahme auf, an der oder in der der erste Arm des Verbindungselementes befestigt werden kann. Dies kann beispielsweise mindestens eine taschenartige oder schlitzartige Vertiefung sein, die sich von einer Schmalseite des Bauteils, dem Verbindungsteil benachbart, in den Bauteil erstreckt. Analog gilt dies für den zweiten elektronischen Bauteil. Ebenso kann die Befestigung eines Schenkels des Verbindungselements an einer Tasche erfolgen, die auf einer Hauptseite des Bauteils vorhanden ist, zum Beispiel auf der Unterseite des Grundkörpers.

Bei solchen Ausführungsformen eignet sich beispielsweise ein Verbindungselement, das wie folgt gestaltet ist:
- ein erster Arm ist nach Art einer flachen Platte gestaltet und entlang einer Längsseite mit dem Gelenk verbunden, von dem sich auch der zweite Arm erstreckt.

Dabei kann das Gelenk nach Art einer Welle gestaltet sein, auf der die entsprechenden Arme (Platten) formschlüssig aufgesetzt sind.

Eine weitere Ausführungsform des Verbindungselementes sieht wie folgt aus:
- der erste Arm ist plattenförmig und in der Aufsicht U-förmig gestaltet,
- Enden der beiden freien U-Schenkel sind über eine Welle miteinander verbunden,
- auf der Welle, zwischen den beiden freien U-Schenkeln des ersten Arms, sitzt der zweite Arm, beide lassen sich auf der Welle verdrehen.

Diese Ausführungsform erlaubt es, den zweiten Arm in die U-förmige Aussparung des ersten Arms zu verschwenken, wenn das Verbindungselement beispielsweise nicht benötigt wird.

Allen vorgenannten Ausführungsformen ist gemeinsam, dass dann, wenn beide elektronischen Bauteile über das Verbindungselement miteinander verbunden sind, die Bauteile in nahezu beliebiger Winkelanordnung zueinander konfektioniert werden können. Wie bei einem konventionellen Laptop lässt sich der zweite Bauteil zum Beispiel auf den ersten Bauteil auflegen (geschlossene Position).

Ist der erste Bauteil horizontal orientiert, lässt sich der zweite Bauteil, der den Bildschirm umfasst, beispielsweise um 120 Grad gegenüber der geschlossenen Position verschwenken (Arbeitsstellung).

Eine weitere Möglichkeit besteht darin, den zweiten Bauteil um 180 Grad gegenüber der geschlossenen Position zu verschwenken und das Ensemble zum Beispiel an einer Wand zu befestigen, so dass Tastatur auf dem ersten Bauteil und Bildschirm auf dem zweiten Bauteil vertikal übereinander liegen.

Wird der zweite Bauteil vom Verbindungselement gelöst verbleibt das Verbindungselement im ersten Bauteil. Der zweite Arm kann jetzt jedoch beispielsweise um 270 Grad gegenüber der "geschlossenen Position" verschwenkt werden, so dass der erste Bauteil (mit der Tastatur) eine geneigte Stellung gegenüber der Horizontalen erhält, was unter bestimmten Bedingungen die Bedienbarkeit der Tastatur erleichtert.

Umgekehrt kann das Verbindungselement auch aus dem ersten Bauteil gelöst werden, aber am zweiten Bauteil verbleiben. In diesem Fall kann der zweite Bauteil, beispielsweise ein Tablet-Computer, analog wie vorstehend beschrieben in einer gewünschten Schrägposition auf einer horizontalen Auflagefläche positioniert werden, indem der erste Arm, der jetzt frei liegt, um einen entsprechenden Winkel, beispielsweise 280 Grad, gegenüber der "geschlossenen Position" gedreht wird.

Selbstverständlich sind beliebige Zwischenpositionen, Zwischenwinkel und Anordnungen der elektronischen Bauteile zueinander möglich.

Dabei stellt es ein besonderes Merkmal dar, dass die Arme des Verbindungselementes um mehr als 270 Grad relativ zueinander verschwenkbar sind, um zusätzliche Positionen des ersten und/oder zweiten elektronischen Bauteils zu ermöglichen.

Um eine sichere Verbindung zwischen den Armen des Verbindungselementes und den elektronischen Bauteilen zu erreichen, wird ein Verbindungselement mit mindestens je einem Abschnitt einer Arretiereinrichtung an jedem Arm zur lösbaren Arretierung des jeweiligen Arms gegenüber dem zugehörigen elektronischen Bauteil vorgeschlagen, wenn der jeweilige Arm seine Endposition in der zugehörigen Aufnahme des zugehörigen elektronischen Bauteils erreicht hat.

Eine solche Arretiereinrichtung kann beispielsweise eine mechanische Rasteinrichtung, eine Nut-Feder-Verbindung, eine Push-Push-Verbindung oder eine magnetische Verbindung sein.

Das Verbindungselement lässt sich mit einem oder mehreren Signalgebern ausrüsten, die zur Anzeige der ordnungsgemäßen Arretierung des ersten Arms im elektronischen Bauteil und/oder des zweiten Arms im zweiten elektronischen Bauteil dient/dienen.

Ebenso sind drahtlose Verbindungen, wie Blutooth -Verbindungen, zwischen den elektronischen Bauteilen möglich.

Neben dem eigenständigen Verbindungselement umfasst die Erfindung ein System, insbesondere einen Laptop, mit folgenden Merkmalen:
- einem ersten, elektronischen Bauteil, das in einem, insbesondere flachen, rechteckigen Gehäuse untergebracht ist und eine Tastatur sowie eine elektronische Datenverarbeitungsanlage umfasst,
- einem zweiten elektronischen Bauteil, das in einem, insbesondere flachen, rechteckigen Gehäuse untergebracht ist und einen Bildschirm umfasst,
- einem Verbindungselement der vorstehend genannten Art, also nach einem der Patentansprüche 1 bis 9,
- ein erster Arm des Verbindungselementes ist in einer korrespondierenden Aufnahme am ersten elektronischen Bauteil einsteckbar und in der Aufnahme arretierbar,
- ein zweiter Arm des Verbindungselementes ist in einer korrespondierenden Aufnahme am zweiten elektronischen Bauteil einsteckbar und in der Aufnahme arretierbar.

Dies entspricht der vorstehend dargestellten Zuordnung der drei separaten Bauteile.

Um die erwähnte elektrische Verbindung zwischen den einzelnen Teilen des Systems sicherzustellen, wurde vorstehend eine Ausführungsform des Verbindungselementes vorgestellt, bei der die Arme Abschnitte einer elektrischen Steckverbindung aufweisen. Korrespondierende zweite Abschnitte der Steckverbindung sind entsprechend dann an der Aufnahme am ersten Bauteil beziehungsweise am zweiten elektronischen Bauteil anordnet.

Stromanschlüsse können am ersten elektronischen Bauteil, am zweiten elektronischen Bauteil und/oder am Verbindungselement vorgesehen werden, je nach dem, ob/welche Teile des Laptops selbstständig, extern, und/oder untereinander mit Energie versorgt werden sollen.

Die mechanische Fixierung zwischen Verbindungselement und elektronischem Bauteil wird am Laptop dadurch erreicht, dass jedem Abschnitt einer Arretiereinrichtung an einem Arm des Verbindungselementes ein korrespondierender Abschnitt der Arretiereinrichtung an jeder Aufnahme des zugehörigen elektronischen Bauteils zugeordnet wird. Dies ist dann jeweils der korrespondierende Teil der erwähnten Rasteinrichtungen, Nut-Federeinrichtungen, Push-Push-Verbindungen oder magnetischen Verbindungen.

Während der erste elektronische Bauteil bevorzugt die Grundfunktionen eines klassischen Laptops aufweist, kann der zweite elektronische Bauteil zum Beispiel ein reiner Bildschirm sein oder aber ein autarker Tablet-Computer.

Das erste Bauteil ist insbesondere aus einem oder mehreren der folgenden Einheiten gewählt:
- eine Tastatureinheit,
- eine Montageeinheit zur Montage an einer Wand oder einem Einrichtungsgegenstand,
- eine Lautsprechereinheit
- optisches Laufwerk,
- Autohalterung,
- Grafiktablett,
- Projektor,
- Schultergurt,
- Mischpult,
- (Zusatz-)Batterie.

Erfindungsgemäß sind insbesondere Systeme offenbart mit mehreren der vorgenannten zweiten Bauteile, dem Verbindungselement und dem ersten Bauteil als Bundle. Der Vorteil besteht in den erweiterten Einsatzmöglichkeiten, insbesondere auch ohne eine drahtlose Verbindung zwischen dem ersten Bauteil und dem zweiten Bauteil. Somit kann die Verbindung auch im Flugzeug hergestellt werden.

Ebenso ist es möglich, als ersten elektronischen Bauteil einen weiteren Tablet-Computer einzusetzen, so dass dann über zwei Bildschirme gleichzeitig gearbeitet werden kann.

Die erwähnten elektrischen Steckverbinder am Verbindungselement ermöglichen es ferner, externe Geräte wie MP3-Player, weitere Monitore, Verstärker oder andere elektronische Bauteile anzuschließen.

Die Erfindung wird nachstehend anhand eines Ausführungsbeispieles näher erläutert. Dabei zeigen - jeweils in schematisierter Darstellung -
- Figur 1:: einen erfindungsgemäßen Laptop im aufgeklappten Zustand,
- Figuren 2a, b:: ein erfindungsgemäßes Verbindungselement in zwei Positionen
- Figur 3:: eine Ansicht der Unterseite eines zweiten elektronischen Bauteils
- Figur 4:: eine Ansicht der Unterseite eines ersten elektronischen Bauteils
- Figur 5:: eine Ansicht einer Kombination von Verbindungselement und zweitem elektronischem Bauteil

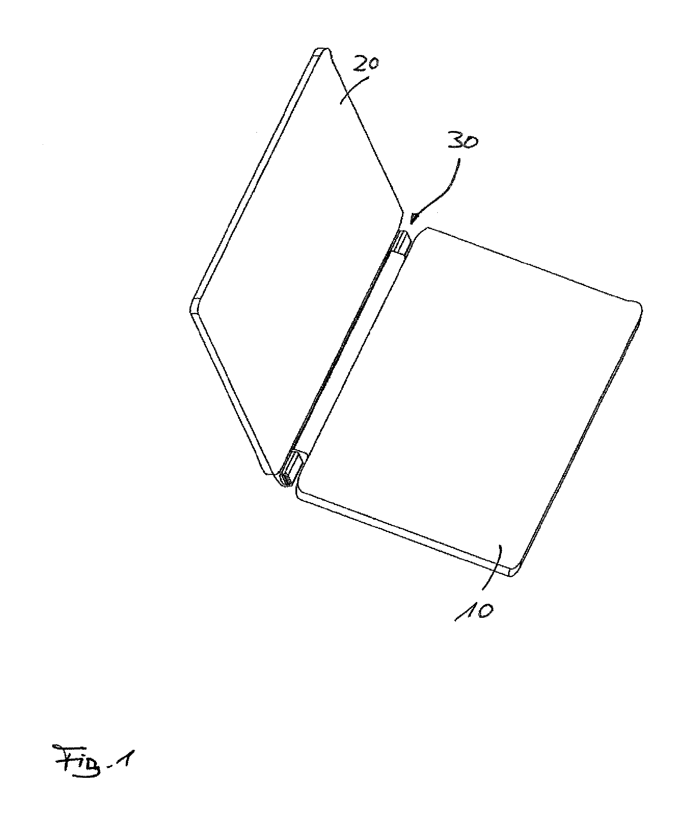

In Figur 1 ist ein erfindungsgemäßer Laptop dargestellt, der drei selbständige Teile umfasst, nämlich einen ersten elektronischen Bauteil 10, einen zweiten elektronischen Bauteil 20 und ein Verbindungselement 30.

Der erste elektronische Bauteil 10 ist ein "Grundkörper" ähnlich wie bei einem konventionellen Laptop, und besteht aus einem flachen, im Wesentlichen rechteckigen Gehäuse, in dem alle relevanten Teile einer Datenverarbeitungsanlage untergebracht sind, einschließlich Festplatte, Batterie, Tastatur etc.

Der elektronische Bauteil 20 ist ein so genannter Tablet-Computer, das heißt eine autarke elektronische Rechnereinheit, die im Gegensatz zum Grundkörper 10 jedoch einen Bildschirm (Touch-Screen) umfasst.

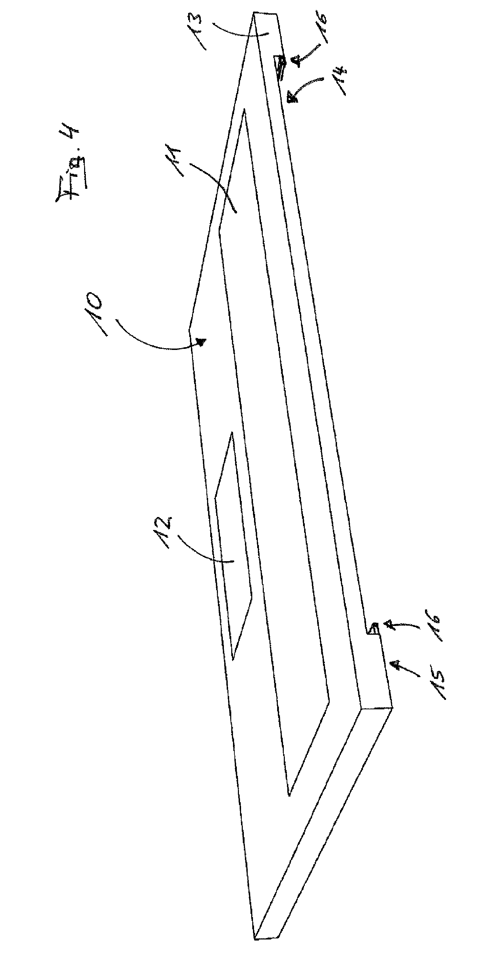

In Figur 4 ist der Bauteil 10 als solcher dargestellt. Schematisch ist eine Tastatur 11 und eine Maus 12 dargestellt.

Zu erkennen ist ferner, dass der Grundkörper 10, ausgehend von seiner rückwärtigen schmalen Stirnseite 13, eine in den Körper des Bauteils 10 hinein verlaufende Tasche 14 aufweist, die nach unten (zur Unterseite 15 des Grundkörpers 10 hin) offen ist.

An gegenüberliegenden Seiten der Aufnahme (Tasche) 14 sind parallel zu den schmalen Seitenflächen des Grundkörpers 10 Führungsleisten 16 angeordnet.

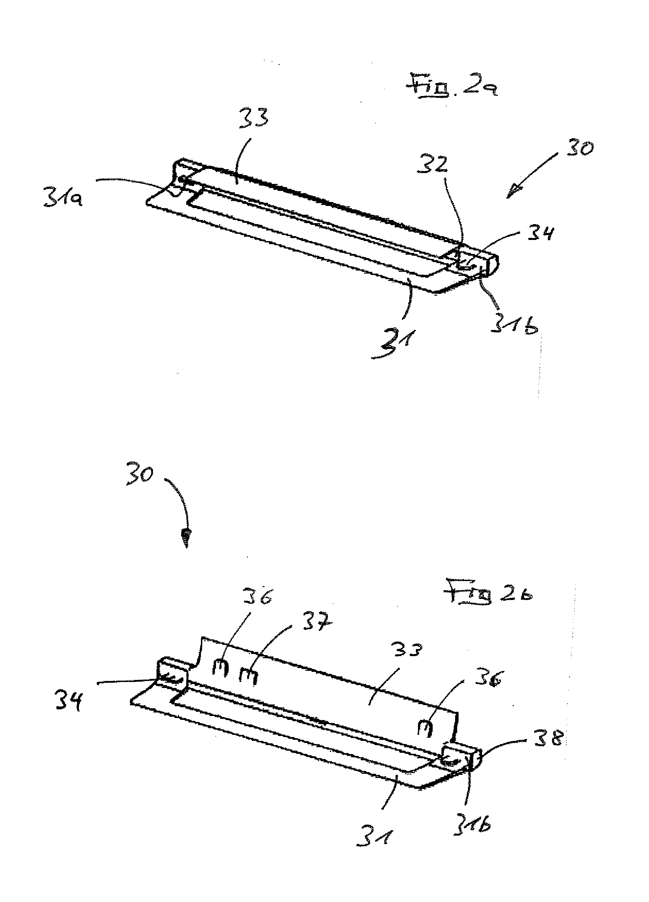

Die taschenförmige Aufnahme 14 mit den randseitigen Führungsleisten 16 dient zur Aufnahme eines Arms 31 des in den Figuren 2a, 2b näher dargestellten Verbindungselementes 30.

Der Arm 31 besteht aus einem plattenförmigen Körper, der in der Aufsicht eine U-Form besitzt, wobei die freien U-Schenkel 31a, 31b endseitig verdickt sind.

In die verdickten Abschnitte 31a, 31b ragen Enden einer Welle 32, wobei die Welle 32 in den Verdickungen 31a, 31b fixiert ist.

Auf dem Abschnitt der Welle 32 zwischen den Verdickungen 31a, 31b ist ein zweiter Arm (Schenkel) 33 des Verbindungselementes 30 auf der Welle 32 montiert, und zwar, unter Überwindung einer einstellbaren Reibkraft drehbar.

Wie sich aus der Zusammenschau der Figuren 2a, 2b ergibt können die Arme 31, 33 des Verbindungselementes 30 entsprechend in beliebigen Winkelstellungen angeordnet werden.

Durch die U-Form des Arms 31 kann der Arm 33 in der Öffnung zwischen den U-Schenkeln platziert werden. Dies wird insbesondere dann zweckmäßig sein, wenn das Verbindungselement 30 als eigenständiges Bauteil Platz sparend gelagert werden soll.

Ansonsten stellt die in Figur 2a dargestellte Position der Schenkel 31, 33 zueinander etwa die geschlossene Position eines Laptops dar, bei der der Bauteil 20 auf dem Bauteil 10 liegt.

Die in Figur 2b dargestellte Position entspricht in etwa der Arbeitsstellung eines Laptops, bei der der Grundkörper 10 horizontal angeordnet ist und der den Bildschirm tragende Bauteil 20 um etwa 110 bis 120 Grad demgegenüber verschwenkt ist.

Das Verbindungselement 30 kann mit dem Schenkel 31 in die Aufnahme 14 des Bauteils 10 eingesteckt und gegenüber diesem verrastet werden. Dazu sind oberhalb der kurzen U-Schenkel an den verdickten Abschnitten 31 a, 31b Rastzungen 34 mit Rastfedern an gegenüberliegenden Längsseiten vorgesehen, die in korrespondierende Öffnungen im Bereich der taschenförmigen Aufnahme 14 lösbar eingerastet werden können.

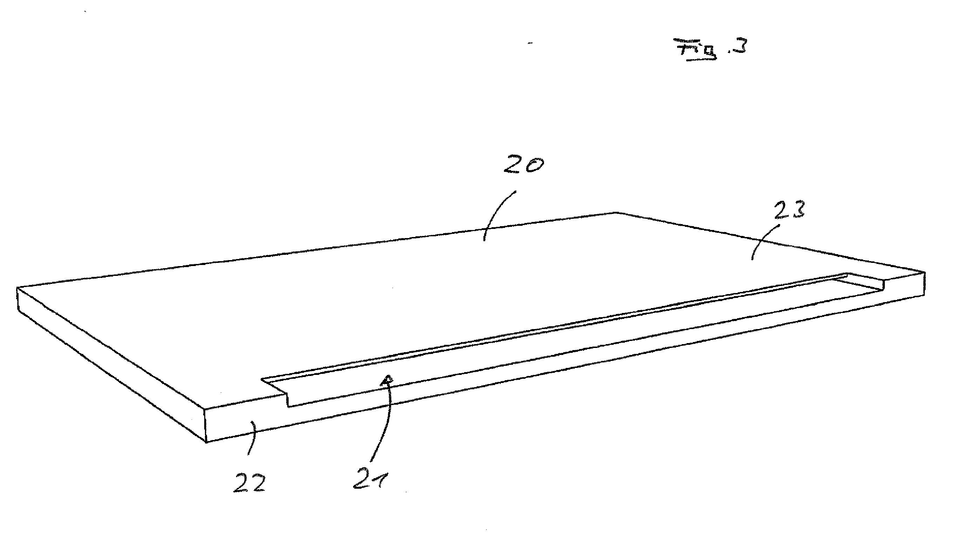

Im Wesentlichen analog erfolgt eine Verbindung/Verrastung zwischen dem zweiten Arm 33 und einer taschenförmigen Aufnahme 21 an der unteren Stirnseite 22 und der Rückseite 23 des zweiten Bauteils 20 (Figur 3).

Wie Figur 2b erkennen lässt sind Rastnasen 36 am zweiten Arm 33 des Verbindungselementes 30 angeordnet, die in korrespondierende Öffnungen im Bereich der Aufnahme 21 des Bauteils 20 zur Verbindung von Arm 33 und Bauteil 20 eingeführt werden, aus diesen Öffnungen aber durch entsprechende Zugkraft auch wieder gelöst werden können.

In Figur 2b ist ferner ein Stecker 37 zu erkennen, der am Arm/Schenkel 33 montiert ist und mit einer korrespondierenden Dose zusammenwirkt, die in der Aufnahme 21 des Bauteils 20 verläuft. Beim Aufsetzen des Bauteils 20 auf den Arm 33 werden Stecker und Dose des Steckverbinders zusammengeführt und damit eine elektrische Verbindung zu einem Stromanschluss geführt, der am verdickten Teil 31b ausgebildet ist und mit 38 in Figur 2b gekennzeichnet wird.

Ein solcher Steckerteil 37 könnte analog am Arm 31 angeordnet werden und mit einer korrespondierenden Steckereinheit am Bauteil 10 zusammenwirken, um eine direkte elektrische/elektronische Verbindung zwischen erstem und zweitem Bauteil zu schaffen.

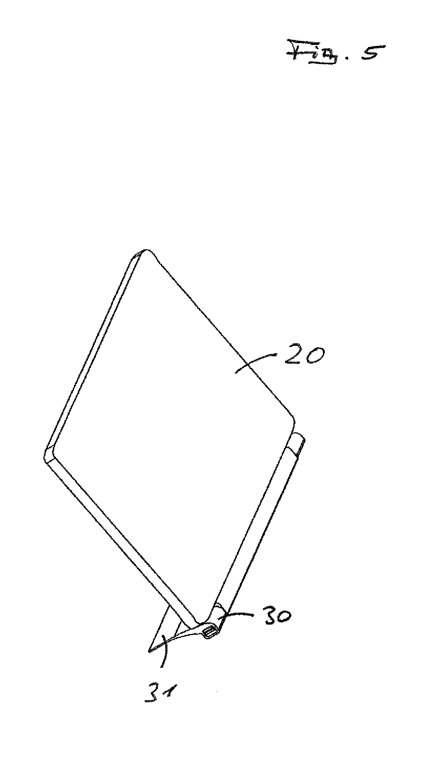

In Figur 5 ist eine Situation des erfindungsgemäßen Laptops dargestellt, bei der das Verbindungselement 30 aus dem Grundkörper 10 entnommen wurde. Entsprechend steht der Arm 31 jetzt über den zweiten Bauteil 20 vor. Der Arm 31 kann zum Aufstellen des Tablet-Computers 20 genutzt werden, und zwar in beliebigen Winkelstellungen, je nach Winkelverschiebung des Arms 31 gegenüber dem Arm 33 auf der Welle 32.

## Patentansprüche

1. Diskretes Verbindungselement zwischen einem ersten, insbesondere elektronischen, Bauteil (10), vorzugsweise mit einem flachen, rechteckigen Gehäuse, das eine Tastatur und eine elektronischen Datenverarbeitungsanlage aufnimmt, und einem zweiten elektrischen Bauteil (20),der insbesondere einen Bildschirm umfasst, mit folgenden Merkmalen:
a) das Verbindungselement (30) weist einen ersten Arm (31) und einen zweiten Arm (33) auf,
b) erster und zweiter Arm (31,33) sind über mindestens ein Gelenk (32) gegeneinander verschwenkbar,
c) der erster Arm (31) ist in eine korrespondierenden Aufnahme (14) des ersten elektronischen Bauteils (10) einsteckbar und in der Aufnahme (14) arretierbar,
d) der zweite Arm (33) ist in eine korrespondierende Aufnahme (21) des zweiten elektronischen Bauteils (20) einsteckbar und in der Aufnahme (21) arretierbar.

2. Verbindungselement nach Anspruch 1, mit mindestens einem der folgenden Merkmale:
a) der erste Arm (31) weist mindestens einen Abschnitt einer ersten elektrischen Steckverbindung auf,
b) der zweite Arm (33) weist mindestens einen Abschnitt (37) einer zweiten elektrischen Steckverbindung auf.

3. Verbindungselement nach Anspruch 2, mit einer elektrischen Verbindung zwischen den an den Armen (31,33) ausgebildeten korrespondierenden Abschnitten (37) der beiden Steckverbindungen.

4. Verbindungselement nach Anspruch 1, mit einem Stromanschluss (38).

5. Verbindungselement nach Anspruch 1, mit folgenden Merkmalen:
a) der erster Arm (31) ist in einer Aufsicht U-förmig gestaltet
b) Enden (31a, 31b) der beiden freien U-Schenkel sind über eine Welle (32) miteinander verbunden,
c) auf der Welle (32) sitzt der zweite Arm (33).

6. Verbindungselement nach Anspruch 1, bei dem das Gelenk (32) so ausgebildet ist, dass die Arme (31,33) um mehr als 270° zueinander verschwenkbar sind.

7. Verbindungselement nach Anspruch 1 mit mindestens je einem Abschnitt (36) einer Arretiereinrichtung an jedem Arm (31, 33) zur lösbaren Arretierung des jeweiligen Arms (31, 33) gegenüber dem zugehörigen elektronischen Bauteil (10, 20), wenn der jeweilige Arm (31, 33) seine Endposition in der zugehörigen Aufnahme (14, 21) des zugehörigen elektronischen Bauteils (10, 20) erreicht hat.

8. Verbindungselement nach Anspruch 7, wobei die Arretiereinrichtung eine mechanische Rasteinrichtung, eine Nut-Feder-Einrichtung, eine push-push-Verbindung oder eine magnetische Verbindung ist.

9. Verbindungselement nach Anspruch 1, mit mindestens einem Signalgeber zur Anzeige der ordnungsgemäßen Arretierung des ersten Arms (31) im ersten elektronischen Bauteils (10) und/oder des zweiten Arms (33) im zweiten elektronischen Bauteile (20).

10. System, insbesondere Laptop, mit folgenden Merkmalen:
a) einem ersten, insbesondere elektronischen, Bauteil (10), das vorzugsweise in einem flachen, rechteckigen Gehäuse untergebracht ist und eine Tastatur und eine elektronischen Datenverarbeitungsanlage umfasst,
b) einem zweiten elektronischen Bauteil (20), das in einem, insbesondere flachen, Gehäuse untergebracht ist und einen Bildschirm umfasst,
c) einem Verbindungselement (30) nach einem der Ansprüche 1 bis 9,
d) ein erster Arm (31) des Verbindungselements (30) ist in einer korrespondierende Aufnahme (14) am ersten elektronischen Bauteil (14) einsteckbar und in der Aufnahme (14) arretierbar,
e) ein zweiter Arm (33) des Verbindungselements (30) ist in eine korrespondierende Aufnahme (21) am zweiten elektronischen Bauteil (20) einsteckbar und in der Aufnahme (21) arretierbar.

11. System nach Anspruch 10, mit folgenden Merkmalen:
a) der erste Arm (31) des Verbindungselements (30) weist mindestens einen Abschnitt einer ersten elektrischen Steckverbindung auf, dessen korrespondierender zweiter Abschnitt an der Aufnahme (14) am ersten elektronischen Bauteil (10) angeordnet ist,
b) der zweite Arm (33) weist mindestens einen Abschnitt (37) einer zweiten elektrischen Steckverbindung auf, dessen korrespondierender zweiter Abschnitt an der Aufnahme(21) am zweiten elektronischen Bauteil (20) angeordnet ist.

12. System nach Anspruch 10 mit mindestens einem der folgenden Stromanschlüsse: am ersten elektronischen Bauteil (10), am zweiten elektronischen Bauteil (20), am Verbindungselement (30).

13. System nach Anspruch 10 und 7 mit mindestens je einem korrespondierenden Abschnitt (37) einer Arretiereinrichtung an jeder Aufnahme (14, 21) des zugehörigen elektronischen Bauteils (10,20).

14. System nach Anspruch 10, bei dem der zweite elektronische Bauteil (20) ein autarker tablet Computer ist.

15. System nach Anspruch 10 oder 14, bei dem der erste elektronische Bauteil (10) ein autarker Bildschirm oder ein weiterer tablet Computer ist.

## Geänderte Patentansprüche

### Geänderte Patentansprüche gemäss Regel 137(2) EPÜ.

**2.** Verbindungselement nach Anspruch 1, mit mindestens einem der folgenden Merkmale:
a) der erste Arm (31) weist mindestens einen Abschnitt einer ersten elektrischen Steckverbindung auf,
b) der zweite Arm (33) weist mindestens einen Abschnitt (37) einer zweiten elektrischen Steckverbindung auf.

**3.** Verbindungselement nach Anspruch 2, mit einer elektrischen Verbindung zwischen den an den Armen (31,33) ausgebildeten korrespondierenden Abschnitten (37) der beiden Steckverbindungen.

**4.** Verbindungselement nach Anspruch 1, mit einem Stromanschluss (38).

**5.** Verbindungselement nach Anspruch 1, bei dem das Gelenk (32) so ausgebildet ist, dass die Arme (31,33) um mehr als 270° zueinander verschwenkbar sind.

**6.** Verbindungselement nach Anspruch 1 mit mindestens je einem Abschnitt (36) einer Arretiereinrichtung an jedem Arm (31, 33) zur lösbaren Arretierung des jeweiligen Arms (31, 33) gegenüber dem zugehörigen elektronischen Bauteil (10, 20), wenn der jeweilige Arm (31, 33) seine Endposition in der zugehörigen Aufnahme (14, 21) des zugehörigen elektronischen Bauteils (10, 20) erreicht hat.

**7.** Verbindungselement nach Anspruch 6, wobei die Arretiereinrichtung eine mechanische Rasteinrichtung, eine Nut-Feder-Einrichtung, eine push-push-Verbindung oder eine magnetische Verbindung ist.

**8.** Verbindungselement nach Anspruch 1, mit mindestens einem Signalgeber zur Anzeige der ordnungsgemäßen Arretierung des ersten Arms (31) im ersten elektronischen Bauteils (10) und/oder des zweiten Arms (33) im zweiten elektronischen Bauteile (20),

**9.** System, insbesondere Laptop, mit folgenden Merkmalen:
a) einem ersten, insbesondere elektronischen, Bauteil (10), das vorzugsweise in einem flachen, rechteckigen Gehäuse untergebracht ist und eine Tastatur und eine elektronischen Datenverarbeitungsanlage umfasst,
b) einem zweiten elektronischen Bauteil (20), das in einem, insbesondere flachen, Gehäuse untergebracht ist und einen Bildschirm umfasst,
c) einem Verbindungselement (30) nach einem der Ansprüche 1 bis 8,
d) ein erster Arm (31) des Verbindungselements (30) ist in einer korrespondierende Aufnahme (14) am ersten elektronischen Bauteil (14) einsteckbar und in der Aufnahme (14) arretierbar,
e) ein zweiter Arm (33) des Verbindungselements (30) ist in eine korrespondierende Aufnahme (21) am zweiten elektronischen Bauteil (20) einsteckbar und in der Aufnahme (21) arretierbar.

**10.** System nach Anspruch 9, mit folgenden Merkmalen:
c) der erste Arm (31) des Verbindungselements (30) weist mindestens einen Abschnitt einer ersten elektrischen Steckverbindung auf, dessen korrespondierender zweiter Abschnitt an der Aufnahme (14) am ersten elektronischen Bauteil (10) angeordnet ist,
d) der zweite Arm (33) weist mindestens einen Abschnitt (37) einer zweiten elektrischen Steckverbindung auf, dessen korrespondierender zweiter Abschnitt an der Aufnahme(21) am zweiten elektronischen Bauteil (20) angeordnet ist.

**11.** System nach Anspruch 9 mit mindestens einem der folgenden Stromanschlüsse: am ersten elektronischen Bauteil (10), am zweiten elektronischen Bauteil (20), am Verbindungselement (30).

**12.** System nach Anspruch 9 mit mindestens je einem korrespondierenden Abschnitt (37) einer Arretiereinrichtung an jeder Aufnahme (14, 21) des zugehörigen elektronischen Bauteils (10,20).

**13.** System nach Anspruch 9, bei dem der zweite elektronische Bauteil (20) ein autarker tablet Computer ist.

**14.** System nach Anspruch 9 oder 13, bei dem der erste elektronische Bauteil (10) ein autarker Bildschirm oder ein weiterer tablet Computer ist.
